# EUROPÄISCHE PATENTSCHRIFT

(11) **EP 1 792 079 B1**
(45) Veröffentlichungstag und Bekanntmachung des Hinweises auf die Patenterteilung: **14.04.2010**
(21) Anmeldenummer: 05796272.2
(22) Anmeldetag: 16.09.2005
(51) Int. Cl.: F03G 7/06

(54) **STELL-ODER BETÄTIGUNGSGLIED AUS EINEM STRUKTURIERTEN FORMGEDÄCHTNIS-LEGIERUNGSMATERIAL**
POSITIONING OR ACTUATING MEMBER MADE OF A STRUCTURED SHAPE MEMORY ALLOY MATERIAL
ORGANE DE REGLAGE OU D'ACTIONNEMENT CONSTITUE D'UN ALLIAGE A MEMOIRE DE FORME STRUCTURE

(30) Priorität: 16.09.2004 DE 102004044979; 08.12.2004 DE 102004059188
(43) Veröffentlichungstag der Anmeldung: 06.06.2007
(73) Patentinhaber: Palladio Systeme GmbH, 38855 Wernigerode (DE)
(72) Erfinder: SIMONS, Oliver, 39108 Magdeburg (DE)
(74) Vertreter: Kruspig, Volkmar
(86) Internationale Anmeldenummer: PCT/EP2005/010010
(87) Internationale Veröffentlichungsnummer: WO 2006/029892

(56) Entgegenhaltungen:
- WO-A-96/36462
- DE-A1- 10 210 954
- DE-A1- 19 502 370
- US-A- 4 553 393
- US-A1- 2002 046 622
- BALLANDRAS S ET AL: "Microstereophotolithography and shape memory alloy for the fabrication of miniaturized actuators" SENSORS AND ACTUATORS A, ELSEVIER SEQUOIA S.A., LAUSANNE, CH, Bd. 62, Nr. 1-3, Juli 1997 (1997-07), Seiten 741-747, XP004119718 ISSN: 0924-4247

## Beschreibung

Die Erfindung betrifft ein Stell- oder Betätigungsglied aus einem strukturierten Formgedächtnis-Legierungsmaterial, welches sich bei höheren Temperaturen pseudoelastisch verhält und während des Be- und Entlastungszyklus eine Hysterese durchläuft, gemäß Oberbegriff des Patentanspruchs 1, sowie einen miniaturisierten mechanischen Aktor zum Ausführen von Bewegungen unterschiedlicher Art mit einem oder mehreren derartigen Stell- oder Betätigungsgliedern.

Charakteristisch für Formgedächtnis-Legierungen ist deren Fähigkeit zur reversiblen diffusionslosen Umwandlung zwischen einer Tieftemperaturphase und einer Hochtemperaturphase. Die Umwandlungstemperaturen sind hierbei stark von der Legierung und ihrer thermo-mechanischen Vorbehandlung abhängig. Wird ein Bauteil unterhalb der Martensit-Temperatur verformt, so tritt eine bleibende, scheinbar plastische Verformung auf. Beim Erwärmen eines Bauteils aus einem derartigen Material über die Austenit-Temperatur wird die ursprüngliche Form wieder eingenommen.

Die beschriebene Umwandlung kann z.B. für Stellelemente direkt genutzt werden. Wird die Umwandlung behindert, treten nutzbare Kräfte auf.

Der vorstehend erläuterte Formgedächtnis-Effekt entsteht bei Cu-Cd, In-Ti und Cu-Zn-Legierungen. Nitinol als Nickel-Titan-Legierung mit etwa 50% Nickelanteil ist ein Material, bei welchem der Formgedächtnis-Effekt besonders stark hervortritt. Härte und Festigkeit von Gedächtnislegierungen sind vergleichbar mit den Werten hochwertiger Stähle oder anderen gebräuchlichen metallischen Werkstoffen, wobei weiterhin insbesondere bei dem vorerwähnten Nitinol-Material hervorragende Korrosionseigenschaften und eine gute Ermüdungsfestigkeit im Hinblick auf technische Anwendungen gegeben ist. Auch besteht die Möglichkeit, bei der Nitinol-Legierung durch Variation der chemischen Zusammensetzung die Möglichkeit der Umwandlungstemperatur über einen sehr großen Bereich von etwa -100°C bis +100°C nahezu frei einzustellen.

Durch eine geeignete Vorbehandlung der Gedächtnis-Legierung ist es darüber hinaus möglich, dass sich die Legierung an zwei verschiedene Formen erinnern kann.

Die physikalische Ursache für das komplexe thermo-mechanische Verhalten von Formgedächtnis-Legierungen liegt in der Ursache des Auftretens eines Phasenübergangs. Bei hohen Temperaturen ist die unbelastete Phase austenitisch, während durch Abkühlung der martensitische Zustand erreicht wird.

Der Formgedächtnis-Effekt wird in Bereichen der Medizin, der Raumfahrt und der Elektro- und Sicherheitstechnik bereits seit einiger Zeit erfolgreich genutzt. Beispielsweise werden zur Heilung von Knochenbrüchen Schienen eingesetzt, die aus einem Nitinol-Material bestehen. Durch Erwärmung der Schiene, die am Knochen fixiert ist, zieht sich diese zusammen und drückt dabei, den Heilungsprozess fördernd, die Knochenenden gegeneinander.

Bei elektrischen Steckverbindungen, die einen hohen Kontaktdruck ausüben und trotzdem relativ leicht gelöst und wieder geschlossen werden können, werden Verbindungselemente eingesetzt, die aus einem Ring aus Nitinol bestehen, der sich um die Enden der Kontaktstifte, die verbunden werden sollen, legt.

Wenn die Steckverbindung gelöst werden soll, wird diese mit einem Kältemittel besprüht. Bei Erwärmung der Steckverbindung schließt sich selbige wieder.

Im Bereich der Regelungstechnik werden Formgedächtnis-Legierungen sowohl als Temperaturfühler als auch in Funktion eines Stell- oder Betätigungsglieds verwendet. Bekannt geworden sind beispielsweise thermostatische Regelventile für Heizkörper, welche Federn enthalten, die aus einem Formgedächtnis-Legierungsmaterial bestehen.

Ähnlich konstruierte Federn sind in der Lage, anstelle von Magnetkupplungen Ventilatoren für das Kühlsystem eines Kraftfahrzeugs zu steuern.

Im Bereich elektromechanischer Aktoren gehören Elektromagnete zum Steuern und Regeln ebenso zum Stand der Technik wie sogenannte Voicecoil-Aktoren. Elektromagnetische Aktoren bedürfen zum Erzielen signifikanter Halte- und Startkräfte jedoch einer Minimalkonfiguration einer Spulenanordnung, wobei ein schrittweiser Betrieb bei magnetischen Stell- oder Betätigungsgliedern nicht oder nur mit größerem Aufwand realisierbar ist. Weiterhin ist ein Nachteil bekannter elektromagnetischer oder vergleichbarer Aktoren der stets erforderliche relativ große Bauraum und das Wirkungsprinzip-bedingte magnetische Streufeld.

Das Dokument DE 102 10954 A, das als nächstliegenden Stand der Tecknik angesehen wird, offenbart die Merkmale des Oberbegriffs des Anspruchs 1.

Aus dem Vorgenannten ist es daher Aufgabe der Erfindung, ein weiterentwickeltes Stell- oder Betätigungsglied aus einem strukturierten Formgedächtnis-Legierungsmaterial anzugeben, wobei dieses Stell- oder Betätigungsglied elektrisch steuerbar ist, über eine einfache mechanische und konstruktive Ausführung verfügt, kostengünstig hergestellt werden kann und im Vergleich zu den Aktoren des Standes der Technik in vergleichbaren Klassen nur einen geringeren Bauraum benötigt.

Die Lösung der Aufgabe der Erfindung erfolgt durch ein Stell- oder Betätigungsglied aus einem strukturierten Formgedächtnis-Legierungsmaterial, welches sich bei höheren Temperaturen pseudoelastisch verhält und das während des Beund Entlastungszyklus eine Hysterese durchläuft, mit den Merkmalen des Patentanspruchs 1, wobei die Unteransprüche mindestens zweckmäßige Ausgestaltungen und Weiterbildungen darstellen.

Hierfür gilt der erfindungsgemäße Grundsatz, wonach das geometrische Stell- oder Betätigungsglied so ausgeführt ist, dass an keinem bewegungsrelevanten Ort das Formgedächtnis-Legierungsmaterial einer Streckung >3% unterliegt. Weiterhin ist dafür Sorge zu tragen, dass eine gleichmäßige Erwärmung des Flächenkörpers beim Aktivieren gegeben ist.

Dem Grundgedanken der Erfindung folgend, weist das Stell- oder Betätigungsglied ein geschlossenes äußeres sowie ein inneres, bevorzugt ebenfalls geschlossenes Segment auf. Diese Segmente können gemäß einer bevorzugten Ausführungsform als Kreisringe, z.B. aus einem bandförmigen Material durch Stanzen hergestellt werden.

Das innere Segment des Stell- oder Betätigungsglieds ist vom äußeren Segment beabstandet, wobei zwischen den Segmenten Verbindungsstege ausgebildet sind.

Diese Verbindungsstege sind einem vorgegebenen Kurven- oder Winkelverlauf folgend sowohl einerseits am inneren als auch andererseits am äußeren Segment fixiert.

Weiterhin sind an den Segmenten elektrische Kontaktierungsstellen vorgesehen, um über einen Stromfluss eine Erwärmung der Anordnung zum Zweck des Erzeugens einer Relativbewegung der Segmente zu bewirken, und zwar unter Nutzung des eingangs beschriebenen Formgedächtnis-Effekts.

Wie dargelegt, können die Segmente eine Kreisform besitzen, wobei das innere Segment konzentrisch innerhalb des äußeren Segments befindlich ist und die Verbindungsstege über einen vorgegebenen Abschnitt zunächst radial, dann tangential und anschließend wieder erneut radial verlaufen.

Die Anzahl der Verbindungsstege zwischen den Segmenten liegt im Bereich zwischen drei und zehn, bevorzugt zwischen drei und sechs, wobei die Stege ebenfalls bevorzugt gleich verteilt bzw. mit gleichem Winkelabstand voneinander angeordnet werden.

Die Kontaktierungsstellen sind bei einer Ausführungsform der Erfindung vorzugsweise im Bereich des Übergangs der Verbindungsstege zum jeweiligen Segment ausgebildet.

Zum Erreichen größerer Verstellwege und maximierter Kräfte besteht die Möglichkeit, eine Vielzahl von elektrisch kontaktierten Segmenten in einer Sandwich- oder Stapelanordnung koaxial übereinander vorzusehen, wobei die Stapelanordnung über einen inneren Führungsstift und/oder mittels eines äußeren Führungsgehäuses beweglich fixiert ist. Der innere Führungsstift kann bei der Ausführungsform kreisringförmiger Segmente, insbesondere eines kreisringförmigen Innensegments, letztere aufnehmen.

Zweckmäßigerweise sind im Führungsgehäuse Rückstellmittel vorgesehen, beispielsweise in Form einer Wendel- oder Schraubenfeder oder ähnlicher elastischer Elemente.

Zur Kontaktierung der Segmente kommen flexible Leiterplatten, d.h. sogenannte Flexboards zum Einsatz.

Die Flexboard-Leiterplatten können in bevorzugter Weise in die Sandwich- oder Stapelanordnung integriert werden, wobei die Stromzuführung dann innerhalb des vorerwähnten Führungsgehäuses in axialer Richtung der Sandwich- oder Stapelanordnung weitergeführt wird.

Die Segmente und Verbindungsstege können einstückig, insbesondere durch Stanzen aus einem bandförmigen Material gefertigt werden, was die Produktivität erhöht und die Herstellungskosten reduziert.

Die Segmente wiederum sind in praktischer Umsetzung des Stell- oder Betätigungsglieds mit einem oder mehreren Aktoren verbunden.

Der Aktor wiederum kann mit einem Rastgesperre, einem Schub-Schraubantrieb zum Erzeugen einer Drehbewegung aus einer linearen Bewegung oder einem ähnlichen Getriebe in Wirkverbindung stehen.

Dadurch, dass Segmente in Gruppen oder einzeln elektrisch ansteuerbar sind, und durch Vorgabe der Hystereserichtung bei der Ausbildung des Segmentstapels können mit entsprechendem elektrischem Aktivieren entgegengesetzt gerichtete Verstellbewegungen ausgeführt werden.

Zur gezielten Strompfadausbildung und definierten Erwärmung über den spezifischen Widerstand des Formgedächtnis-Materials können die Querschnittsflächen-Verhältnisse zwischen den Segmenten und den Verbindungsstegen unterschiedlich gewählt werden. Bei einer Ausführungsform ist der Querschnitt der Verbindungsstege kleiner als derjenige der Kreisringform-Segmente.

Mit den erfindungsgemäßen Stell- oder Betätigungsgliedern können Bremsschlitten geringer Masse ausgeführt oder aber auch Kupplungsbetätigungselemente, realisiert werden. Im Vergleich zu magnetischen Aktuatoren ist das erfindungsgemäße Stell- oder Betätigungsglied sehr geräuscharm und daher in vorteilhafter Weise im Bereich der Medizintechnik anwendbar. Ebenso entsteht beim Aktivieren der erfindungsgemäßen Stell- oder Betätigungsglieder keine Störstrahlung, die in irgendeiner Weise Probleme hinsichtlich der elektromagnetischen Verträglichkeit nach sich zieht.

Mit dem vorstehend beschriebenen Stell- oder Betätigungsglied können miniaturisierte mechanische Aktoren zum Ausführen von Bewegungen unterschiedlicher Art realisiert werden, welche bezogen auf Halte- und Startkräfte elektromagnetische Aktoren durchaus gleichwertig sind bzw. diese Werte mit wesentlich kleineren Bauformen erreichen können.

Die Erfindung soll nachstehend anhand von Ausführungsbeispielen sowie unter Zuhilfenahme von Figuren näher erläutert werden.

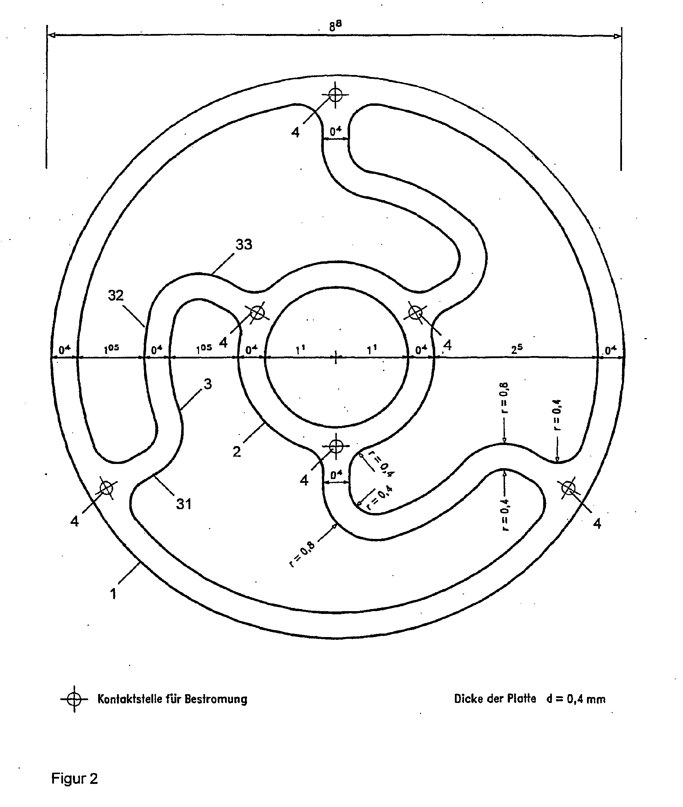

Hierbei zeigen:

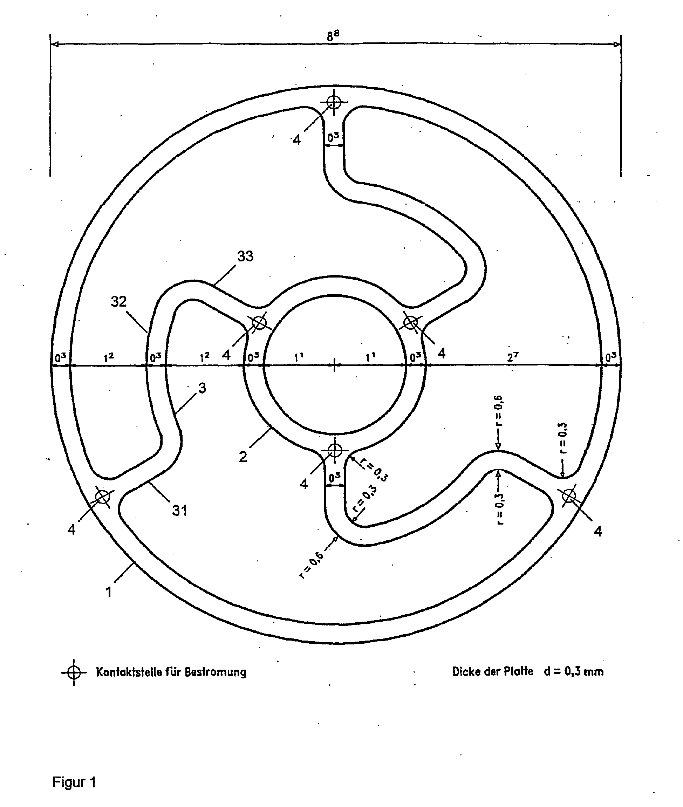

- Fig. 1: verschiedene Varianten von Stell- oder Betätigungsgliedelementen in Form eines
- und 2: inneren kreisringförmigen Segments und eines äußeren kreisringförmigen Segments, die über Verbindungsstege miteinander in Kontakt stehen, und zwar zum Einsatz in einem zylindrischen Gehäuse, wobei die Dicke des Formgedächtnis-Legierungsmaterials gemäß Fig. 1 im Bereich von 0,3mm und gemäß Fig. 2 im Bereich von 0,4mm liegt, sowie mit unterschiedlichen Breiten der Kreisringe der Segmente bzw. der Verbindungsstege;
- Fig. 3: die Darstellung eines weiteren Beispiels einer Segmentanordnung für ein Stell- oder Betätigungsglied mit Angaben zu den Kontaktstellen für die Bestromung in einer Ausführungsvariante mit sechs Verbindungsstegen anstelle der drei Verbindungsstege gemäß den Fig. 1 und 2;
- Fig. 4: eine als Stanzteil hergestellte Reihenanordnung von drei Stell- oder Betätigungsglied-Segmenten mit Verbindungsstegen, welche diskontinuierliche Übergangsbereiche entgegen den Verbindungsstegen gemäß den Fig. 1 bis 3 besitzen;
- Fig. 5: eine Ausführungsform eines Stell- oder Betätigungsglieds bzw. Aktors mit Führungsgehäuse und Feder-Rückstellelement;
- Fig. 6: eine weitere Ausführungsform eines Aktors mit integriertem Führungsteil und Federkraft-Rückstellelement;
- Fig. 7: eine Ausführungsform eines Aktors mit Stepper-Funktion durch gezielte einzelne elektrische Ansteuerung von Stell- oder Betätigungsgliedelementen;
- Fig. 8: eine Ausführungsform analog derjenigen entsprechend der Konstruktion nach Fig. 7, jedoch mit gleichzeitiger elektrischer Anregung der Stell- oder Betätigungsglied-Segmente;
- Fig. 9: eine Ausführungsform eines Stell- oder Betätigungsglieds mit Stepper-Funktion und Permanent-Stellung, wobei durchgehend verlötete Flexboards zum Einsatz kommen;
- Fig. 10: eine Ausführungsform analog derjenigen nach Fig. 9, jedoch mit einer Stromzuführung über flexible Leiter;
- Fig. 11: eine Ausführungsform eines Aktors mit den erfindungsgemäßen Stell- oder Betätigungsgli.edern, welcher die Möglichkeit der Erzeugung einer Drehbewegung sowie des Fixierens von erreichten Steilbewegungen an vorgesehenen Fixpunkten bei einer gleichzeitigen einfachen Stromzuführung ermöglicht;
- Fig. 12: eine Ausführungsform eines Stell- oder Betätigungsglieds mit einem vereinfachten Rastgesperre über einen Federstahlbügel, der mit seinem kopfseitigen Ende in Ausnehmungen oder Rücksprünge einer Betätigungsstange eingreift;
- Fig. 13: eine Aktorvariante mit in zwei Richtungen wirkenden Stell- oder Betätigungsgliedern bzw. Segmenten zum Erzeugen einer gezielten Bewegungsumkehr und
- Fig. 14: eine kopfseitige Detaildarstellung eines Aktors mit an der Betätigungsstange vorgesehenem Schub-Schraubgetriebe zum Umformen der linearen Verstellbewegung in eine Drehbewegung.

Die Stell- oder Betätigungsglieder gemäß den Ausführungsbeispielen bestehen aus einem strukturierten Formgedächtnis-Legierungsmaterial und werden bevorzugt durch Stanzen aus einem Band gefertigt. Das Formgedächtnis-Legierungsmaterial verhält sich bei höheren Temperaturen pseudoelastisch und durchläuft während des Be- und Entlastungszyklus eine Hysterese.

Die Darstellungen gemäß den Fig. 1 bis 4 zeigen ein Ausführungsbeispiel eines äußeren, kreisförmigen Segments 1, welches in seinem Inneren ein weiteres, ebenfalls kreisförmiges inneres Segment 2 umfasst. Das äußere Segment 1 und das innere Segment 2 sind gemäß den Darstellungen nach Fig. 1, 2 und 4 über jeweils drei Verbindungsstege 3 mechanisch in Kontakt stehend.

Die Verbindungsstege 3 verlaufen in einem ersten Abschnitt 31 zunächst ausgehend vom äußeren Segment 1 radial und gehen dann im Mittelabschnitt 32 in einen tangentialen Verlauf über.

Dem Mittelabschnitt 32 schließt sich ein zweiter Abschnitt 33 an, der wiederum annähernd radial verläuft.

Im Übergangsbereich zwischen den jeweiligen Verbindungsstegen 3 und dem äußeren Segment 1 sowie dem inneren Segment 2 sind Kontaktierungsstellen 4 für die Bestromung des Stell- oder Betätigungsglieds vorgesehen.

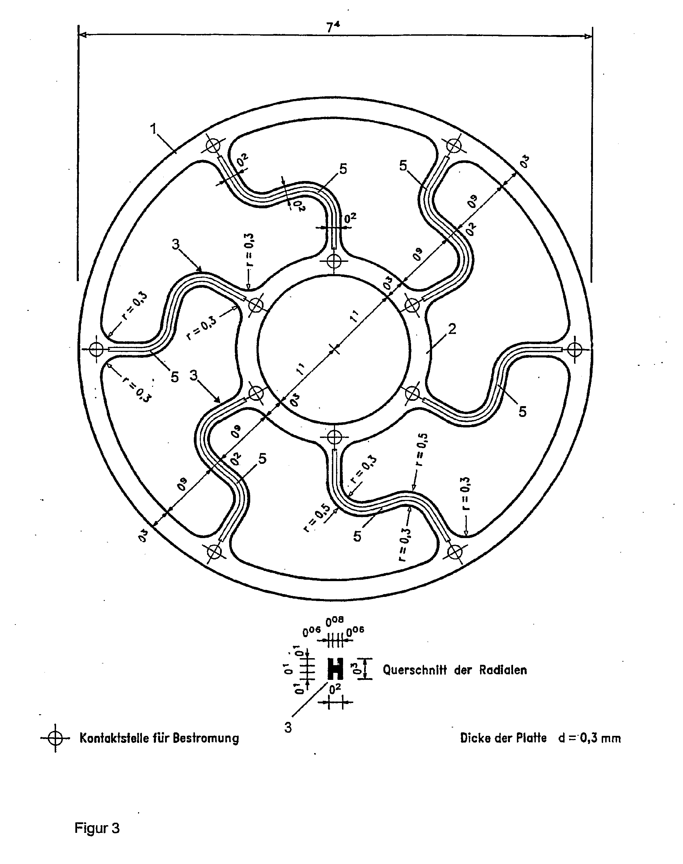

Die sich ausbildenden Strompfade sind in der Fig. 3 mit dem Bezugszeichen 5 jeweils symbolisiert. Die Fig. 3 macht darüber hinaus deutlich, dass anstelle von drei Verbindungsstegen 3 auch mehrere; z.B. sechs derartige Stege zwischen dem inneren Segment 2 und dem äußeren Segment 1 vorgesehen sein können. Der Querschnitt der Verbindungsstege 3 ist beispielhaft im unteren Bildteil der Fig. 3 gezeigt.

Wie aus den Fig.1 bis 3 ersichtlich, weisen die Verbindungsstege einen kontinuierlichen Verlauf mit speziellen Radien auf.

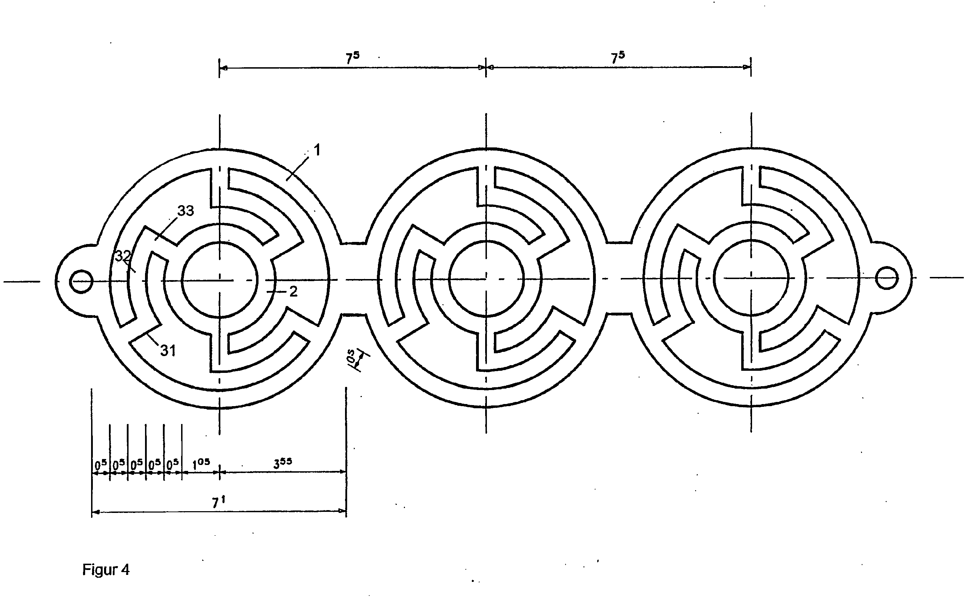

Gemäß der Fig. 4 hingegen sind auch diskontinuierliche Übergänge zwischen dem ersten Abschnitt 31, dem Mittelabschnitt 32 und dem zweiten Abschnitt 33 des jeweiligen Stegs 3 möglich.

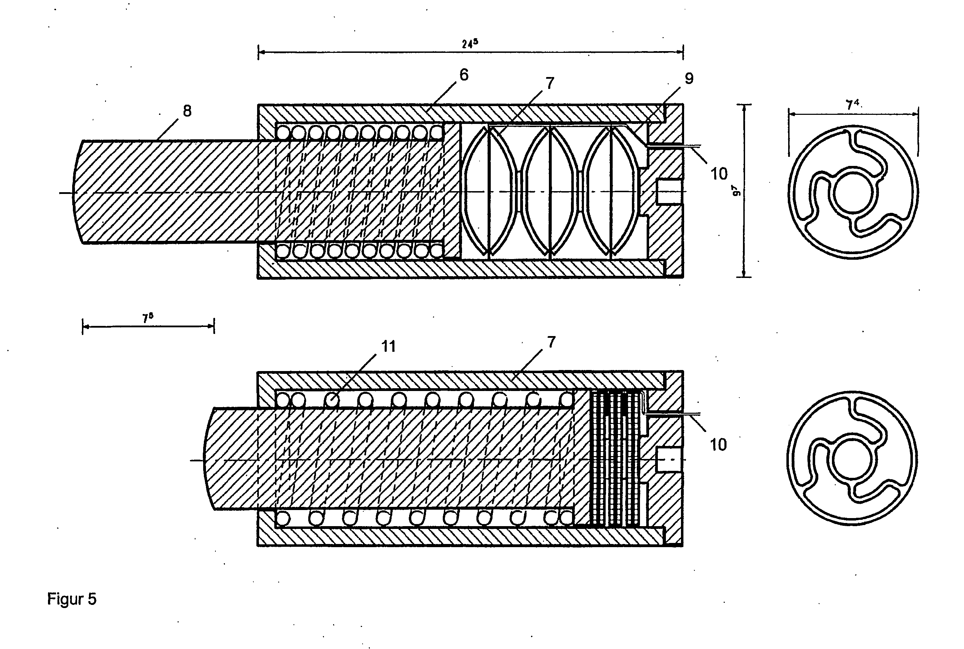

Bei dem Beispiel eines Linearverstellaktors nach Fig. 5 sind mehrere Stell- oder Betätigungsglieder 6 in einer Sandwich-Anordnung innerhalb eines Führungsgehäuses 7 aufgenommen. Der Aktor nach Fig. 5 weist einen Betätigungsstempel 8 auf, welcher im Zustand gemäß oberem Bildteil nach außen aus dem Führungsgehäuse 7 unter Wirkung der Kräfte der Stell- oder Betätigungsglieder 6 verschoben ist bzw. bewegt wurde. Die Stromzuführung für die Stell- oder Betätigungsglieder 6 ist über die Leitungselemente 9 und den Außenanschluss 10 symbolhaft gezeigt.

Im unteren Bildteil ist dargestellt, wie unter Wirkung einer Rückstellkraft mit Hilfe einer Feder 11 die Stell- oder Betätigungsglieder 6 in ihre zusammengedrückte Lage oder Position überführt wurden.

Der Verstellweg und die Verstellkraft lassen sich durch die Wahl und die Anordnung bzw. die Packung der Stell- oder Betätigungsglieder 6 innerhalb des Führungsgehäuses 7 vielfältig variieren.

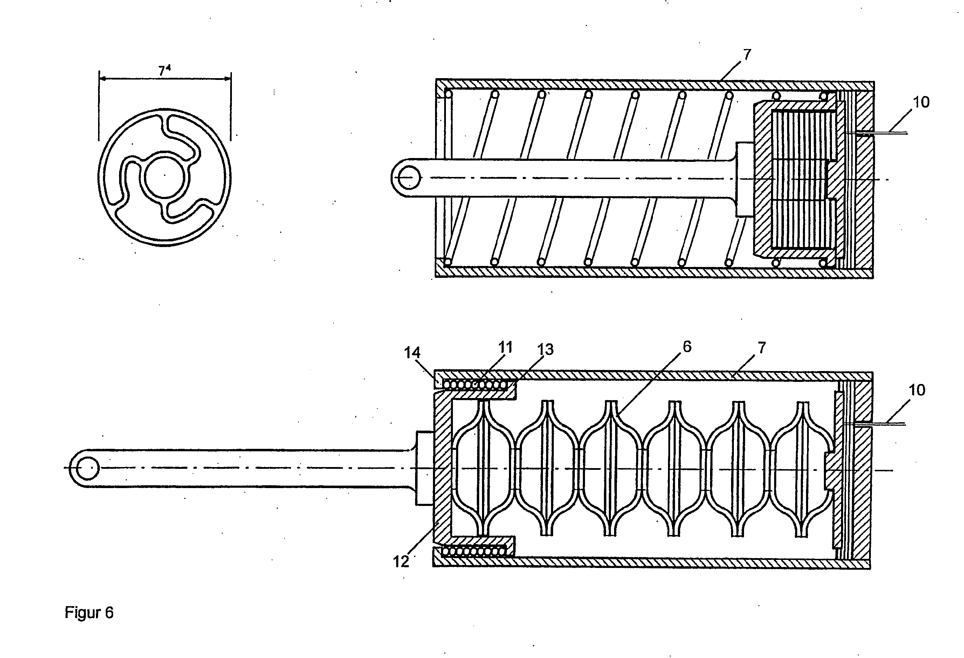

Eine Variante einer größeren Gruppe von jeweils zwei im Bereich des äußeren Segments 1 gegeneinander fixierten Stell- oder Betätigungsglieder 6 zeigt die Darstellung nach Fig. 6. Auch dort ist wiederum ein Führungsgehäuse 7 vorhanden, wobei innerhalb des Gehäuses eine Buchse 12 beweglich gleitet, die über einen Buchsenbund 13 sich mittels einer Feder 11 an einem Gehäusebund 14 abstützt.

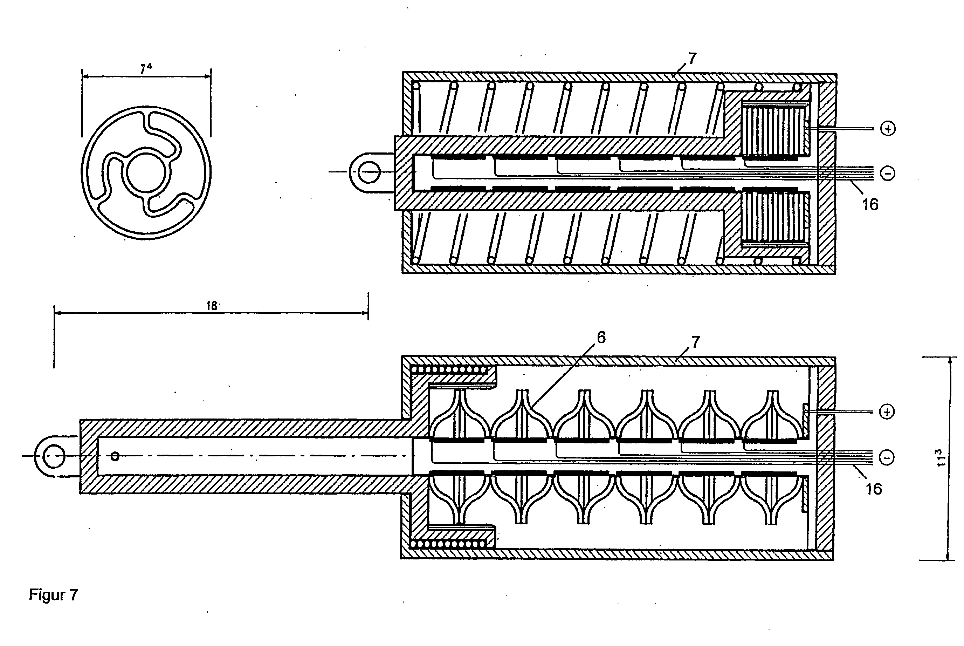

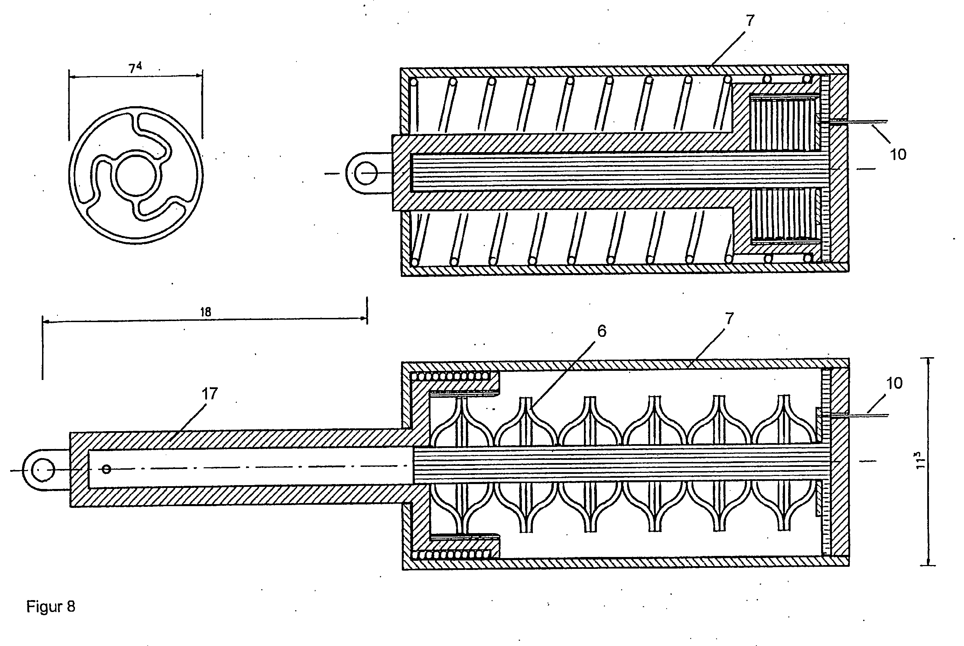

Die elektrische Beschaltung der Stell- oder Betätigungsglieder 6 gemäß Fig. 6 erfolgt in Reihe. Hingegen wird die Beschaltung der jeweiligen Stell- oder Betätigungsgliedpaare 6 gemäß Fig. 7 separat ermöglicht, und zwar über entsprechende Einzelzuleitungen 16.
Auf diese Weise lässt sich eine Stepper-Funktion des so ausgerüsteten Aktors realisieren. Gemäß dem Ausführungsbeispiel nach Fig. 8 ist die Buchse 12 mit einem integralen stangenförmigen Betätigungsglied 17 versehen. Dieses Betätigungsglied 17 kann wie gezeigt eine hohlzylindrische Form besitzen.

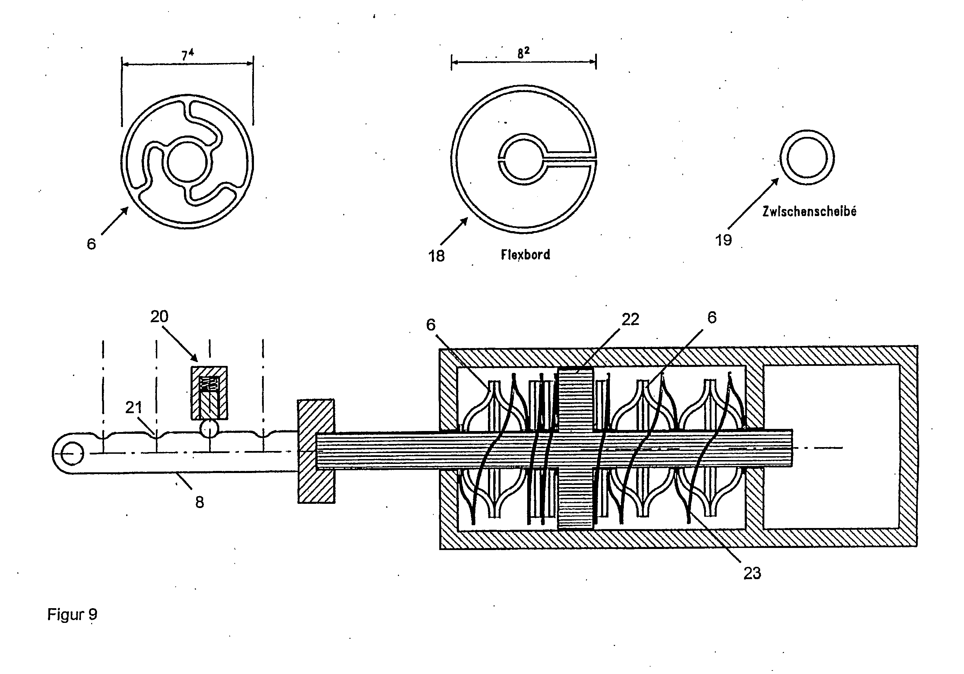

Der obere Bildteil nach Fig. 9 lässt nun ein einzelnes Stell- oder Betätigungsglied, bestehend aus einem äußeren und einem inneren Kreisringsegment mit Verbindungsstegen erkennen sowie ein beispielhaftes Flexboard 18 zur Kontaktierung der einzelnen Stell- oder Betätigungsglieder 6 und eine Isolierungszwischenscheibe 19, welche dann Einsatz findet, wenn eine einzelne Ansteuerung eines Stell- oder Betätigungsgliedpaars 6 oder eines einzelnen Stell- oder Betätigungsglieds 6 gewünscht wird.

Die mit der Ausführungsform nach Fig. 9 erreichbare Stepper-Funktion mit Permanent-Stellung durch ein Rastgesperre 20, welches auf den Betätigungsstempel 8 und dort vorgesehene Rücksprünge 21 wirkt, umfasst beidseitig eines Zwischenbunds 22 angeordnete Stell- oder Betätigungsgliedpaare, und zwar unter Verzicht auf ein Feder-Rückstellelement.

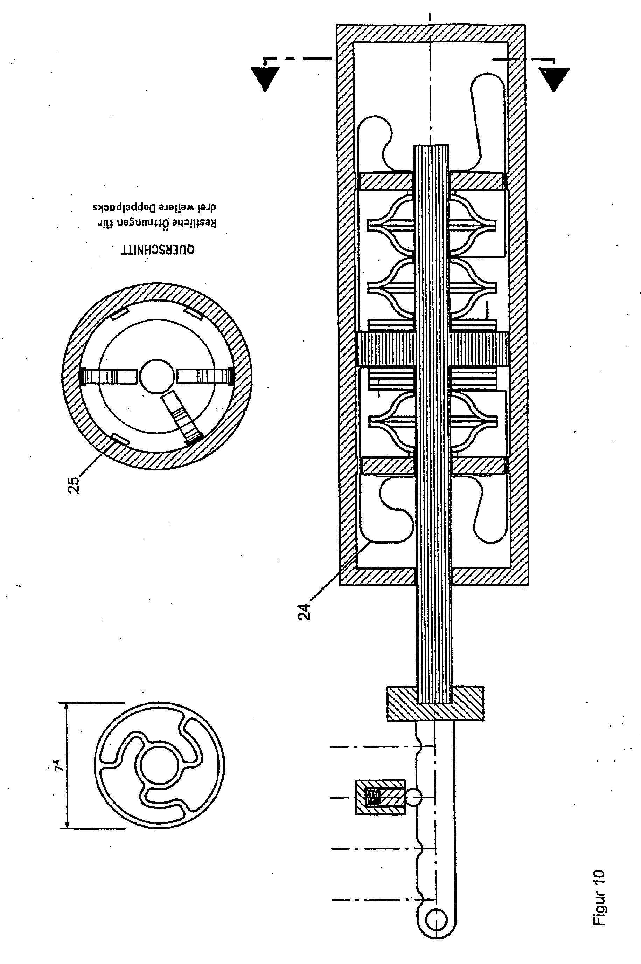

Durch entsprechend selektives Ansteuern eines jeweiligen Stell- oder Betätigungsglieds oder Stell- oder Betätigungsgtiedpaars 6 kann der Betätigungsstempel 8 gemäß bildlicher Darstellung nach links oder rechts bewegt werden. Für die Stromzuführung gemäß Ausführungsbeispiel nach Fig. 9 kommt ein durchgehend verlötetes Flexboard 23 zur Anwendung. Hingegen wird gemäß der Darstellung nach Fig. 10 auf Stromzuführungsbänder 24 zurückgegriffen, die in Nuten 25 (siehe Querschnittsdarstellung nach Fig. 10, rechts oben) aufgenommen werden.

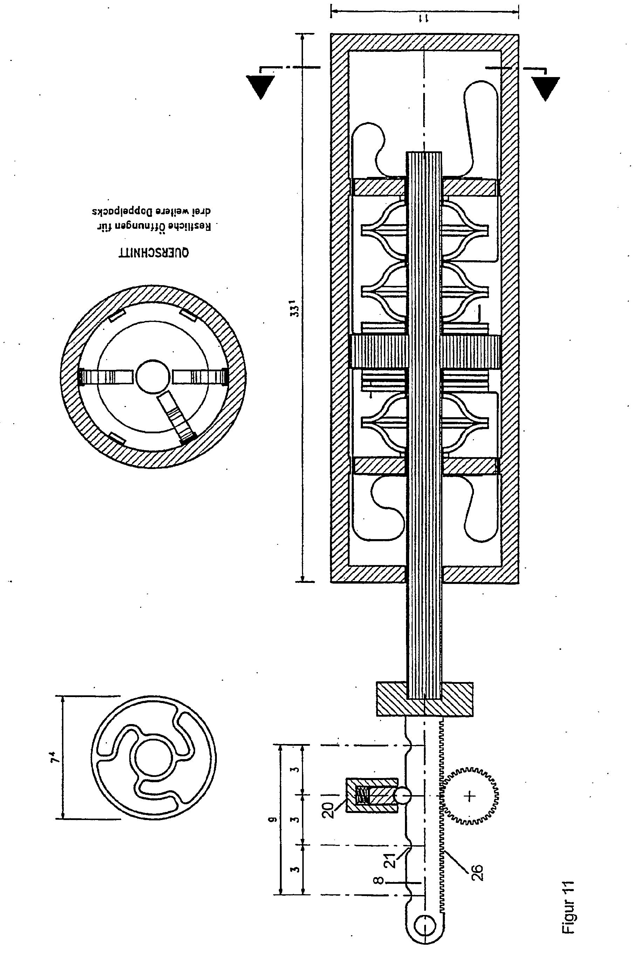

Gemäß der Ausführungsvariante nach Fig. 11 besteht über eine Zahnstange 26 am Betätigungsstempel 8 die Möglichkeit, Drehbewegungen abzugreifen.

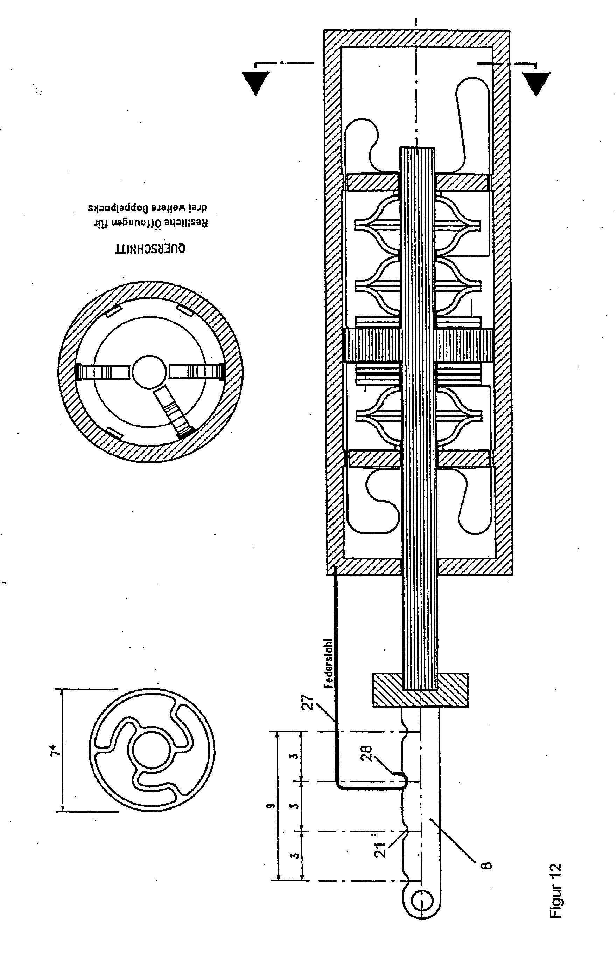

Anstelle eines Rastgesperres 20 kann gemäß Fig. 12 auch ein Federbügel 27 zum Halten einer Permanent-Stellung eines erfindungsgemäßen Aktors Anwendung finden, wobei der Federstahlbügel 27 mit seinem abgewinkelten kopfseitigen Ende 28 in Nuten 21 des Betätigungsstempels 8 eingreift, so dass die gewünschte Arretierungsfunktion gegeben ist.

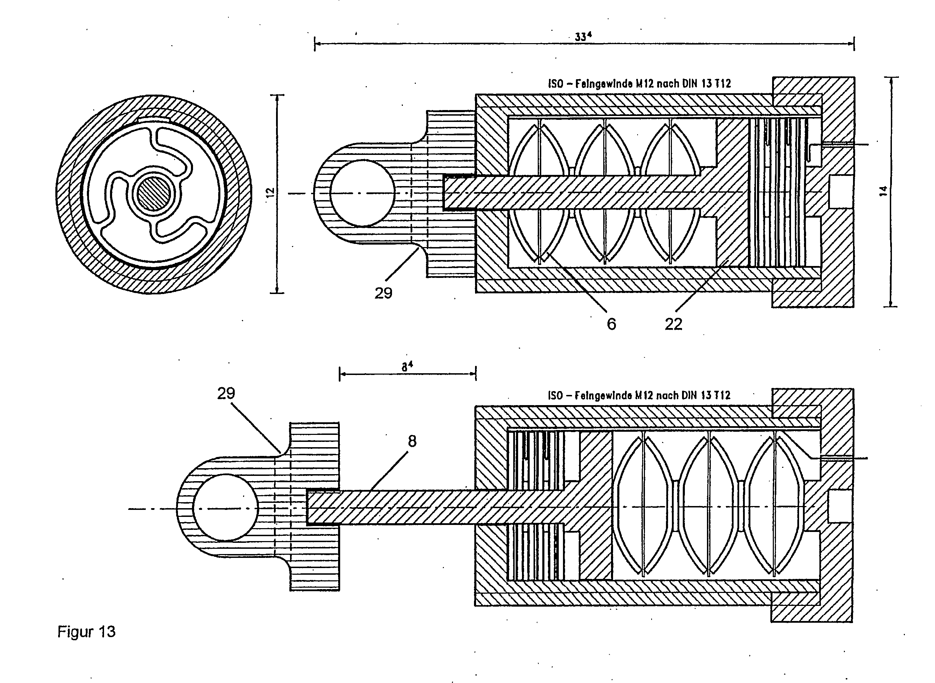

Auch der Aktor gemäß der Fig. 13 besitzt einen Zwischenbund 22 mit beidseitig des Bundes angeordneten Stell- oder Betätigungsgliedern 6, so dass der dortige Betätigungsstempel 8 mit entsprechender selektiver elektrischer Ansteuerung entweder der bezogen auf den Zwischenbund 22 linksseitigen Stell- oder Betätigungsglieder 6 oder der rechtsseitigen Stell- oder Betätigungsglieder 6 in eine entsprechende Richtung translatorisch bewegbar ist.

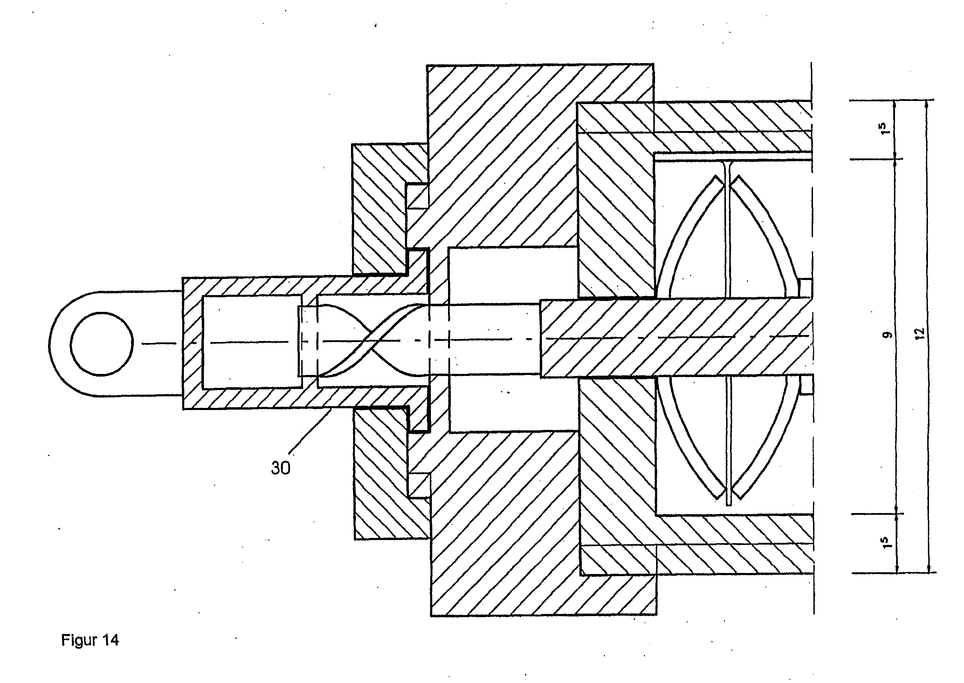

Der Kopf 29, welcher am Betätigungsstempel 8 z.B. form- oder kraftschlüssig befestigt ist, kann gemäß der Darstellung nach Fig. 14 durch ein Schub-Schraubgetriebe 30 ersetzt werden, so dass die translatorische Bewegung, herrührend von den Stell- oder Betätigungsgliedern 6, in eine rotatorische Bewegung gewandelt werden kann.

Wie aus den nur beispielhaften Varianten mit Blick auf die Fig. 5 bis 14 ersichtlich wird, kann unter Rückgriff auf die erfindungsgemäßen Stell- oder Betätigungsglieder mit den speziellen Segmenten aus einem Formgedächtnis-Legierungsmaterial nebst Verbindungsstegen zwischen den Segmenten der Aufbau von miniaturisierten Aktoren erfolgen, wobei die einzelnen Segmente oder Stell- oder Betätigungsglieder in einem hohen Maße standardisierbar sind. Verstellwege und Verstellkräfte lassen sich durch entsprechende Auswahl bzw. Anzahl gepackter Stell- oder Betätigungsglieder oder Stell- oder Betätigungsgliedpaare realisieren, wobei die notwendigen aufzubringenden Ströme beherrschbar sind.

Zurückgehend auf eigene Untersuchungen konnte festgestellt werden, dass die Reaktion derartig ausgebildeten Stell- oder Betätigungsglied-Aktoren außerordentlich schnell ist und ein vorteilhaftes Halten des erreichten Zustands auch bei Fortfall der Bestromung aufgrund der Formgedächtnis-Eigenschaften gegeben ist.

### Bezugszeichenliste

- 1: äußeres Segment
- 2: inneres Segment
- 3: Verbindungssteg
- 31: erster Abschnitt
- 32: Mittelabschnitt
- 33: zweiter Abschnitt
- 4: Kontaktierungsstellen
- 5: Strompfad
- 6: Stell- oder Betätigungsglied
- 7: Führungsgehäuse
- 8: Betätigungsstempel
- 9: Leitungselemente
- 10: Außenanschluss
- 11: Feder
- 12: Buchse
- 13: Buchsenbund
- 14: Gehäusebund
- 16: Einzelzuleitungen
- 17: Betätigungsglied an der Buchse
- 18: Flexboard
- 19: Isolierzwischenscheibe
- 20: Rastgesperre
- 21: Rücksprung
- 22: Zwischenbund
- 23: durchgehend verlötetes Flexboard
- 24: Bänder
- 25: Nut
- 26: Zahnstange
- 27: Federstahlbügel
- 28: kopfseitiges Ende des Federstahlbügels
- 29: Kopf
- 30: Schub-Schraubgetriebe

## Patentansprüche

1. Stell- oder Betätigungsglied (6) aus einem strukturierten Formgedächtnis-Legierungsmaterial, welches sich bei höheren Temperaturen pseudoelastisch verhält und während des Be- und Entlastungszyklus eine Hysterese durchläuft,
**dadurch gekennzeichnet, dass**
dieses ein geschlossenes äußeres sowie ein inneres Segment (1, 2) aufweist,
das innere Segment (2) vom äußeren Segment (1) beabstandet ist,
zwischen den Segmenten Verbindungsstege (3) ausgebildet sind, wobei diese Verbindungsstege (3), einem vorgegebenen Kurven- oder Winkelverlauf folgend, sowohl einerseits am inneren als auch andererseits am äußeren Segment (1) fixiert und weiterhin an den Segmenten (1, 2) elektrische Kontaktierungsstellen (4) vorgesehen sind, um über einen Stromfluss eine Erwärmung der Anordnung zum Zweck des Erzeugens einer Relativbewegung der Segmente (1, 2) zu bewirken, wobei die Segmente (1, 2) eine beliebige geometrische Form aufweisen können und die Verbindungsstege über einen vorgegebenen Abschnitt zunächst radial, dann tangential und anschließend erneut radial verlaufen, die Kontaktierungsstellen (4) vorzugsweise im Bereich des Übergangs der Verbindungsstege (3) zum jeweiligen Segment ausgebildet sind sowie die Segmente (1, 2) und Verbindungsstege (3) einstückig aus einem bandförmigen Material gefertigt sind.

2. Stell- oder Betätigungsglied nach Anspruch 1,
**dadurch gekennzeichnet, dass**
die Segmente (1, 2) eine Kreisringform besitzen, wobei das innere Segment (2) konzentrisch innerhalb des äußeren Segments (1) befindlich ist.

3. Stell- oder Betätigungsglied nach Anspruch 1 oder 2,
**dadurch gekennzeichnet, dass**
die Anzahl der Verbindungsstege (3) zwischen drei und zehn beträgt, wobei die Stege gleich verteilt angeordnet sind.

4. Stell- oder Betätigungsglied nach einem der vorangegangenen Ansprüche,
**dadurch gekennzeichnet, dass**
eine Vielzahl von elektrisch kontaktierten Segmenten (1, 2) in einer Sandwich- oder Stapelanordnung koaxial übereinander vorgesehen ist, wobei die Stapelanordnung über einen inneren Führungsstift und/oder mittels eines äußeren Führungsgehäuses (7) oder sonstigen Führungselements beweglich fixiert ist.

5. Stell- oder Betätigungsglied nach Anspruch 4,
**dadurch gekennzeichnet, dass**
am oder im Führungsgehäuse (7) Rückstellmittel vorgesehen sind.

6. Stell- oder Betätigungsglied nach Anspruch 5,
**dadurch gekennzeichnet, dass**
die Rückstellmittel eine oder mehrere Federn (11) umfassen.

7. Stell- oder Betätigungsglied nach einem der vorangegangenen Ansprüche,
**dadurch gekennzeichnet, dass**
zur Kontaktierung der Segmente Flexboard-Leiterplatten (18) vorgesehen sind.

8. Stell- oder Betätigungsglied nach Anspruch 4 und 7,
**dadurch gekennzeichnet, dass**
die Flexboard-Leiterplatten (18) in die Sandwich- oder Stapelanordnung integriert sind.

9. Stell- oder Betätigungsglied nach einem der vorangegangenen Ansprüche,
**dadurch gekennzeichnet, dass**
die Segmente und Verbindungsstege (3) einstückig, insbesondere durch Stanzen ausgebildet sind.

10. Stell- oder Betätigungsglied nach einem der vorangegangenen Ansprüche,
**dadurch gekennzeichnet, dass**
die Segmente (1, 2) mit einem Aktor in Verbindung stehen.

11. Stell- oder Betätigungsglied nach Anspruch 10,
**dadurch gekennzeichnet, dass**
der Aktor mit einem Rastgesperre (20), einem Schub-Schraubantrieb oder dergleichen Getriebe in Wirkverbindung steht.

12. Stell- oder Betätigungsglied nach Anspruch 4,
**dadurch gekennzeichnet, dass**
die Segmente (1,2) in Gruppen oder einzeln elektrisch ansteuerbar sind, wobei durch Vorgabe der Hystereserichtung bei der Ausbildung des Stapels mit entsprechendem elektrischen Aktivieren entgegengesetzt gerichtete Verstellbewegungen ausführbar sind.

13. Stell- oder Betätigungsglied nach einem der vorangegangenen Ansprüche,
**dadurch gekennzeichnet, dass**
zur gezielten Strompfadausbildung die Querschnittsflächen-Verhältnisse zwischen den Segmenten (1, 2) und den Verbindungsstegen (3) unterschiedlich gewählt sind.

14. Miniaturisierter mechanischer Aktor zum Ausführen von Bewegungen unterschiedlicher Art mit mehreren Stell- oder Betätigungsgliedern (6) gemäß einem oder mehreren der Ansprüche 1 bis 13.

## Claims

1. Positioning or actuating member (6) made of a structured shape memory alloy material which behaves in a pseudoelastic manner at higher temperatures and undergoes a hysteresis during the loading and unloading cycle,
**characterized in that**
the positioning or actuating member (6) comprises a closed outer and an inner segment (1, 2),
the inner segment (2) is spaced apart from the outer segment (1),
connecting webs (3) are formed between the segments, wherein the connecting webs (3), following a predefined curve shape or angular pattern, are fixed to both the inner and the outer segment (1), and wherein further electrical contact points (4) are provided on the segments (1, 2) in order to heat the arrangement by a current flow so as to generate a relative movement of the segments (1, 2), wherein the segments can have any geometrical shape and the connecting webs extend over a predetermined section initially radially, then tangentially and then again radially, the contact points (4) are preferably formed in the transition area of the connecting webs (3) to the respective segment and the segments (1, 2) and the connecting webs (3) are made integrally from a band-shaped material.

2. Positioning or actuating member according to claim 1,
**characterized in that**
the segments (1, 2) are annulus-shaped, wherein the inner segment (2) is located concentrically inside the outer segment (1).

3. Positioning or actuating member according to claim 1 or 2,
**characterized in that**
the number of the connecting webs (3) is between three and ten, wherein the webs are arranged in a uniformly distributed manner.

4. Positioning or actuating member according to one of the preceding claims,
**characterized in that**
a plurality of electrically contacted segments (1, 2) are provided coaxially above each other in a sandwich or stack arrangement, wherein the stack arrangement is movably fixed by an inner guide pin and/or by means of an outer guide housing (7) or any other guide member.

5. Positioning or actuating member according to claim 4,
**characterized in that**
restoring means are provided on or in the guide housing (7).

6. Positioning or actuating member according to claim 5,
**characterized in that**
the restoring means comprise one or more springs (11).

7. Positioning or actuating member according to one of the preceding claims,
**characterized in that**
flexboard circuit boards (18) are provided to contact the segments.

8. Positioning or actuating member according to claim 4 and 7,
**characterized in that**
the flexboard circuit boards (18) are integrated in the sandwich or stack arrangement.

9. Positioning or actuating member according to one of the preceding claims,
**characterized in that**
the segments and connecting webs (3) are formed integrally, in particular by punching.

10. Positioning or actuating member according to one of the preceding claims,
**characterized in that**
the segments (1, 2) are connected to an actuator.

11. Positioning or actuating member according to claim 10,
**characterized in that**
the actuator is operatively connected to a snap-in locking mechanism (20), a push-type screw drive or the like gear.

12. Positioning or actuating member according to claim 4,
**characterized in that**
the segments (1, 2) are electrically controllable in groups or individually, wherein by predetermining the hysteresis direction during the formation of the stack oppositely directed adjusting movements can be carried out upon a corresponding electrical activation.

13. Positioning or actuating member according to one of the preceding claims,
**characterized in that**
the cross-sectional area relationships between the segments (1, 2) and the connecting webs (3) are selected differently in order to obtain a selective formation of the current path.

14. Miniaturized mechanical actuator for carrying out movements of different types, comprising several positioning or actuating members (6) according to one or more of claims 1 to 13.

## Revendications

1. Organe de positionnement ou d'actionnement (6) en un alliage structuré à mémoire de forme, qui se comporte de manière pseudoélastique à haute température et qui traverse une hystérésis pendant le cycle de mise en charge et de décharge,
**caractérisé en ce que**
celui-ci comprend un segment extérieur fermé ainsi qu'un segment intérieur (1, 2),
le segment intérieur (2) est écarté du segment extérieur (1),
des barrettes de liaison (3) sont réalisées entre les segments, lesdites barrettes de liaison (3) étant fixées, en suivant un tracé prédéterminé en courbe ou en angle, aussi bien d'une part sur le segment intérieur que d'autre part sur le segment extérieur (1), et des emplacements de mise en contact électrique (4) sont en outre prévus sur les segments (1, 2), afin de provoquer un échauffement de l'agencement, via l'écoulement d'un courant électrique, dans le but d'engendrer un mouvement relatif des segments (1, 2), dans lequel les segments (1, 2) peuvent présenter une forme géométrique quelconque et les barrettes de liaison s'étendent, sur un tronçon prédéterminé, tout d'abord radialement, puis tangentiellement et ensuite à nouveau radialement, les emplacements de mise en contact (4) sont de préférence réalisés dans la région de la transition des barrettes de liaison (3) vers le segment respectif, et les segments (1, 2) et les barrettes de liaison (3) sont fabriqués d'un seul tenant à partir d'un matériau en forme de bande.

2. Organe de positionnement ou d'actionnement selon la revendication 1,
**caractérisé en ce que** les segments (1, 2) possèdent une forme circulaire, telle que le segment intérieur (2) se trouve concentriquement à l'intérieur du segment extérieur (1).

3. Organe de positionnement ou d'actionnement selon la revendication 1 ou 2,
**caractérisé en ce que** le nombre des barrettes de liaison (3) s'élève entre trois et dix, et les barrettes sont agencées également réparties.

4. Organe de positionnement ou d'actionnement selon l'une des revendications précédentes,
**caractérisé en ce qu'**il est prévu une pluralité de segments (1, 2) mis en contact électrique, coaxialement les uns au-dessus des autres dans un agencement en sandwich ou en empilement, tel que l'agencement en empilement est fixé de façon mobile via une tige de guidage intérieure et/ou au moyen d'un boîtier de guidage extérieur (7) ou encore au moyen d'un autre élément de guidage.

5. Organe de positionnement ou d'actionnement selon la revendication 4,
**caractérisé en ce que** des moyens de rappel sont prévus sur ou dans le boîtier de guidage (7).

6. Organe de positionnement ou d'actionnement selon la revendication 5,
**caractérisé en ce que** les moyens de rappel comprennent un ou plusieurs ressorts (11).

7. Organe de positionnement ou d'actionnement selon l'une des revendications précédentes,
**caractérisé en ce que** des plaques conductrices de type cartes flexibles (Flexboard) (18) sont prévues pour la mise en contact des segments.

8. Organe de positionnement ou d'actionnement selon la revendication 4 et 7,
**caractérisé en ce que** les plaques conductrices flexibles (18) sont intégrées dans l'agencement en sandwich ou en empilement.

9. Organe de positionnement ou d'actionnement selon l'une des revendications précédentes,
**caractérisé en ce que** les segments et les barrettes de liaison (3) sont réalisés d'un seul tenant, en particulier par poinçonnage.

10. Organe de positionnement ou d'actionnement selon l'une des revendications précédentes,
**caractérisé en ce que** les segments (1, 2) sont reliés à un actionneur.

11. Organe de positionnement ou d'actionnement selon la revendication 10,
**caractérisé en ce que** l'actionneur est en liaison d'action avec un mécanisme de blocage à enclenchement (20), avec un entraînement de poussée à vis, ou un mécanisme similaire.

12. Organe de positionnement ou d'actionnement selon la revendication 4,
**caractérisé en ce que** les segments (1, 2) peuvent être pilotés électriquement par groupe ou individuellement, et en imposant la direction d'hystérésis lors de la constitution de l'empilement et avec activation électrique correspondante, il est possible d'exécuter des mouvements de déplacement orientés en sens opposés.

13. Organe de positionnement ou d'actionnement selon l'une des revendications précédentes,
**caractérisé en ce que**, pour une réalisation ciblée des trajets électriques, les rapports des surfaces de section transversale entre les segments (1, 2) et les barrettes de liaison (3) sont choisis différents.

14. Actionneur mécanique miniaturisé pour exécuter des mouvements de types différents, comprenant plusieurs organes de positionnement ou d'actionnement (6) selon l'une ou plusieurs des revendications 1 à 13.
